# EUROPEAN PATENT SPECIFICATION

(11) **EP 4 206 463 B1**
(45) Date of publication and mention of the grant of the patent: **02.09.2026**
(21) Application number: 22460078.3
(22) Date of filing: 29.12.2022
(51) Int. Cl.: F03G 3/00

(54) **GRAVITY ENERGY STORAGE SYSTEM UTILISING A TRUSS TOWER STRUCTURE**
SCHWERKRAFTENERGIESPEICHERSYSTEM MIT EINER FACHWERKTURMSTRUKTUR
SYSTÈME DE STOCKAGE D'ÉNERGIE PAR GRAVITÉ UTILISANT UNE STRUCTURE DE TOUR EN TREILLIS

(30) Priority: 31.12.2021 PL 44006821
(43) Date of publication of application: 05.07.2023
(73) Proprietor: Jezewska, Elzbieta, Olawa (PL); Jezewski, Andrzej, Olawa (PL)
(72) Inventor: Jezewski, Andrzej, 55-200 Olawa (PL); Jezewska, Elzbieta, 55-200 Olawa (PL); Jezewski, Wojciech, 55-200 Olawa (PL); Kotwicki, Mateusz, 55-200 Olawa (PL)
(74) Representative: Gornicki, Pawel

(56) References cited:
- WO-A1-2021/260450
- WO-A2-2020/018329
- US-A1- 2021 404 446

## Description

Gravity Energy Storage System based on a truss tower structure that includes a ballast block storage zone in its upper section, a ground-to-height and height-to-ground ballast block transfer system and an energy conversion system that uses the concept of kinetic energy generation to drive electrical power generation equipment that is connected to the power transmission and conversion system to be used in the public grid or directly consumed by receivers or to be stored in lithium-ion batteries. The system takes advantage of the principle that when electricity prices are low, the system stores energy by transporting the ballast block from the ground to a certain elevation and when electricity prices are high, the ballast block is lowered to the ground, and the weight of the ballast block drives the gear mechanism or flywheel during the lowering process, which in turn drives the electricity generator.

From publication WO2020018329A2, an energy storage system is known for converting electrical energy into gravitational potential energy and for converting gravitational potential energy into electrical energy, for example to be supplied to the electrical grid. In one variant, the system can use electricity generated by the solar energy then operate at night to unstack the ballast blocks to drive a generator to produce electricity which is fed into the power grid. The system consists of multiple ballast blocks and a crane comprising a frame, an electric motor / generator, one or more bogies capable of moving along the frame, and a cable connected to one or more bogies which are connected to the electric motor / generator. Each of the many blocks is the same size and shape or they are of different sizes. The cable is configured to connect to one or more blocks. The crane may stack one or more blocks on top of each other, moving said blocks from a lower elevation to a higher elevation in order to store an amount of electrical energy in said blocks corresponding to the gravitational potential energy of said blocks. The crane is further designed to remove one or more blocks from the stack by moving said blocks from a higher elevation to a lower elevation thanks to gravity to generate an amount of electrical energy corresponding to the amount of kinetic energy of said one or more blocks when they move from the higher elevation to the lower elevation. The crane is placed on the tower and has one or more booms extending transversely to the tower. Optionally, the booms can rotate around the tower. Two booms located on opposite sides of the tower balance each other. A motor / generator is a unit that can act as both an electric motor and an electric power generator. In another example, the motor/generator has a separate electric motor unit and an electrical power generator unit. The stack of blocks defines a tower having a generally cylindrical shape. The tower comprises multiple blocks optionally arranged to form a windbreak structure which may be cylindrical, block or monolithic. Blocks can also be lifted or lowered to store gravitational potential energy or generate electricity. In another option, the crane is placed on bridges with rails placed on top of the windbreak structure that move or rotate around the centre of the tower. The stack of blocks defines a tower having a generally square cross-sectional shape when viewed from above, and the windbreak structure is generally square, rectangular or C-shaped with an open end.

Another solution is an energy storage based on a modular frame structure in the form of a cuboid, an example of which is the Energy Vault Resiliency Center^{™}. The upper rack levels are a place for storing ballast placed on transport bogies, so that they can be moved to transfer lifts located only in the outermost perimeter of the energy storage and move along its vertical outer walls. The lifts are connected to motor / generators that can be powered from renewable energy sources.

The disadvantages of the state of the art manifest themselves in the fact that during transfer by lifts it is necessary to use transport bogies on each ballast block of the energy storage and there is no possibility to control individual ballast blocks, and the order is enforced by the position of the ballast block on the rack. The unstacking of the energy storage is also hindered by lifts located only in the outermost perimeter of the energy storage tower, and only after lowering the outer ballast blocks could the lifts return to the previous ballast blocks located at the top.

Document WO 2021260450 A1 Gravitational Electromechanical Battery, comprising a plurality of blocks, contains: a rectangular pedestal, on which the upper stack of blocks is located, two parallel vertical walls are mounted on a pedestal on its two opposite edges, two upper rails which laid on the upper ends of parallel vertical walls in their entire length, one or more upper beam cranes mounted on the upper rails. Each beam crane comprising: movable frame; one or more trolleys movably coupled to the frame; one or more block's grabbers, each of which is movably couped to its own trolley, a flat horizontal elongated rectangular surface on which the lower stack of blocks is located, and this surface adjoins the short side to the bottom of the pedestal from the side where the pit is located, and the area of this surface is three or more times larger than the area of the rectangular pedestal on which the upper slack is located, two lower rails laid on two long sides of a flat horizontal elongated surface at a distance from each other greater than the length of the pit, and the lower rails can also be lifted up on two lower parallel walls (trestles), and a lower stack of blocks is placed near the lower rails on a flat horizontal elongated surface. A Gravitational Electromechanical Battery contains also: one or **more** lower gantry or beam cranes mounted on the two lower rails, each crane comprising: a movable frame; one or **more** trolleys movably coupled to the frame; one or **more** block's grabbers, each of which is movably coupled lo its own trolley. Elevator in the form of a movable rectangular platform that can move vertically along the trackways, which are located on the lateral ends of the vertical parallel walls, on the lateral surface of the pedestal, on the lateral surface of the pit.

Document US20210404446A1 reveals an energy storage and delivery system, comprising: one or more modules, each module comprising a plurality of blocks, and a frame having a vertical height above a foundation defined by a plurality of rows that extend horizontally. The frame including an upper and lower sections configured to receive and support a plurality of blocks on them. Between them is intermediate section, that is free of blocks. An energy storage and delivery system comprising a pair of elevator shafts disposed on opposite ends of the plurality of rows, and an elevator cage movably disposed in each of the pair of elevator shafts and operatively coupled to an electric motor-generator, the elevator cage sized to receive and support one or more blocks therein. The elevator cage is operable to move one or more blocks from the second set of rows to the first set of rows to store an amount of electrical energy. The elevator cage in each of the pair of elevator shafts is operable to move one or more blocks from the first set of rows to the second set of rows under a force of gravity to generate an amount of electricity, the elevator cage moving said blocks between each of the second set of rows and each of the corresponding first set of rows along a same vertical distance.
This construction does not allow the ballast blocks to fall freely vertically, during which electricity is generated, and therefore to raise them easily and quickly to the starting position.

Another problem in such cases is the cubic shape of the energy storage, which causes significant wind resistance, which has an adverse effect when located in the vicinity of wind turbines.

The aim of the invention was therefore to develop such a structure of the energy storage system, which will be free of defects resulting from the state of the art, and at the same time will have a surface allows photovoltaic cells, especially flexible photovoltaic coatings, such as, for example, perovskite to be exposed to sunlight.

A gravity energy storage system utilising a truss tower structure, which includes the ballast block storage zone in its upper section, a ground-to-height and height-to-ground ballast block transfer system and a energy conversion system, wherein truss tower structure is made up of modular sections, containing at least two truss modules placed one on top of the other, inside which ballast blocks composed of at least one ballast move vertically suspended on lifting cables, where the modular sections of the truss tower are arranged by adding them next to each other, characterized in that it consists of a reinforced concrete cylindrical structure (7) set on the foundation and truss tower structure (4) placed centrally in it, and in the lowest truss module (5a) there is an energy conversion unit (9), which is connected through a gear and a lifting system with appropriate ballast block (1, 1a, 1b, 1c). The system is housed inside a reinforced concrete cylindrical structure (7), the height of which is at least equal to the height of the modular section (5) of the truss tower, wherein the outer reinforced concrete surface of the cylindrical structure (7) is covered with flexible photovoltaic cells (8) and it is connected to a system for collecting and draining water used for electrolysis. The purpose of the reinforced concrete cylindrical structure (7) is to improve the aerodynamics of a building such as an energy storage, which, among other things, protects it against wind pressure.

Preferably, the diameter of the reinforced concrete cylindrical structure (7) is from 5 m to 100 m.

It is also preferred if the length of the base side of the truss tower (4) is from 1 m to 10 m.

It is also preferred that a single ballast block (1, 1a, 1b, 1c) weighs from 1 ton to 50 tons.

Preferably, the ballast storage level in the loaded state is at a height of 20 metres to 300 metres, and the lowest level is used to house the energy conversion unit (9).

Preferably, the motor of the energy conversion unit (9) is integrated in the same motor / generator housing.

Preferably, the ballast blocks (1a, 1b, 1c) are steel blocks.

In addition, it is preferable that the ballast consists of seven ballast blocks - four upper ballast blocks (1a), two middle ballast blocks (1b) below them and a lower ballast blocks (1c) below them, each of which is connected with the energy conversion unit (9) by means of a lifting cable (2 ) passing through the pulley (2a) located on top of the modular section (5) of the truss tower.

Preferably, there is a linear guide (3c) along the way of lowering and lifting the ballast blocks, on the inner wall of the modular section (5).

Preferably, the ballast blocks are concrete blocks.

In addition, it is preferable that the ballast mass consists of four ballast blocks (1) placed on top of each other, with at least two holes containing tubular guides (3b) through which a steel lifting cable (3) passes connecting all ballast blocks (1) in a vertical row, and the holes extend along the length of the ballast block (1) and are centred along its depth, and divergie in pairs from the centre of the ballast along its width.

Preferably, the energy conversion unit (9) comprises at least a motor / generator with at least one gear motor, a system of winding shafts for lifting cables, a transformer station and cables.

In addition, it is preferred if the energy conversion units (9) are connected to the power collector.

It is also preferred if there is a fenced maintenance and viewing deck (14) on top of the truss tower (4) and the reinforced concrete cylindrical structure (7) with a system for collecting and draining water used for electrolysis.

It is also preferred when wind turbines with a vertical axis of rotation (6) are mounted on the top of the truss tower (4).

It is also preferred when at least one horizontal axis wind turbine (13) is attached to the inner walls of the reinforced concrete cylindrical structure (7) and to the truss tower (4) on the upper levels of the energy storage.

It is also preferred if a maintenance lift (12) is mounted along the side wall of the truss tower (4), in the space defined by the reinforced concrete cylindrical structure.

It is obvious to the expert that all required components are connected to an intelligent management and control system to optimise energy storage operation. Such a system includes at least a weather station, software and controllers.

The basic elements that make up the structure of the energy storage, its ballast blocks, or the energy conversion unit (including the lifting system), as well as the forms of renewable energy supply, have been reflected and defined. However, the details of the figures and the configuration parameters of individual technical means given in the embodiment examples require taking into account the customer's needs and other limitations and local conditions in which the energy storage according to the invention will be located.

Similarly, the principle of storing gravitational potential energy as in the energy storage according to the invention allows the use of many already developed solutions or elements known from the state of the art, which allowed some figures and details in this description to be omitted or simplified.

The advantage of the construction according to the invention is the ability to independently control the lifting and lowering of individual ballast blocks, which significantly affects the efficiency of the energy storage. Shorter unstacking time is aided by the ability to lower all ballast blocks at once, simultaneously from each shaft. The streamlined shape of the reinforced concrete cylindrical structure surrounding the energy storage structure has a positive effect on the wind flow, which is important when the storage facility is located near wind farms. Energy losses are lower due to the elimination of a bogie with an electric drive on each pulley.

Due to the fact that the reinforced concrete structure is of cylindrical shape, the photovoltaic panels cells on its outer surface fully utilise the time of insolation during the day.

In terms of height, the geometry of the energy storage is unlimited as the design can be varied to accommodate foundation requirements.

Due to the option of alternative power supply both from the grid and from renewable energy sources, such as solar or wind, storing the energy is independent of adverse weather conditions.

The stored energy can be held indefinitely until used.

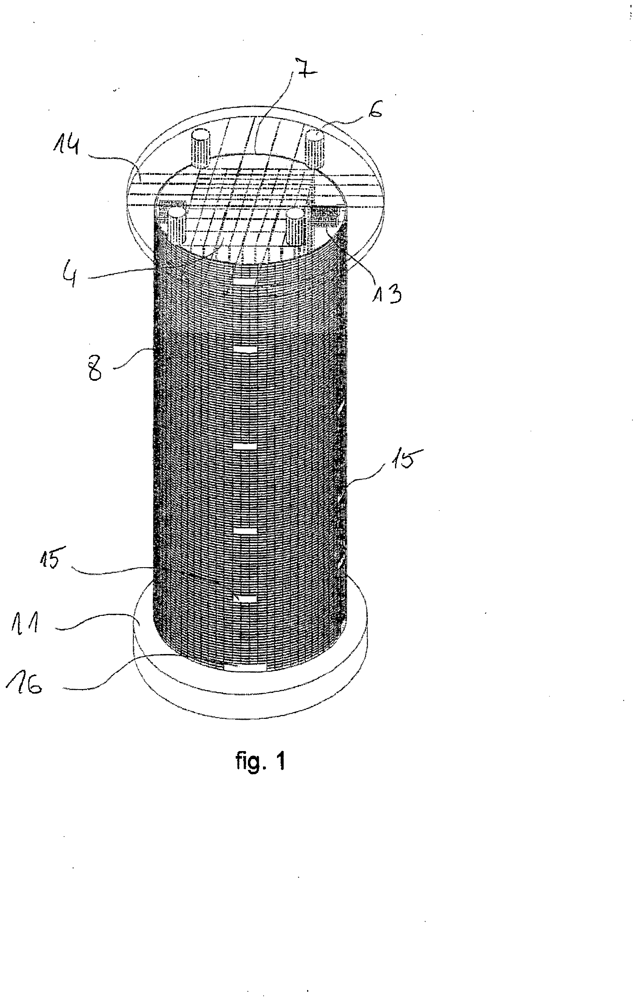

The invention is described in more detail in the embodiments and shown in the figures of Fig. 1

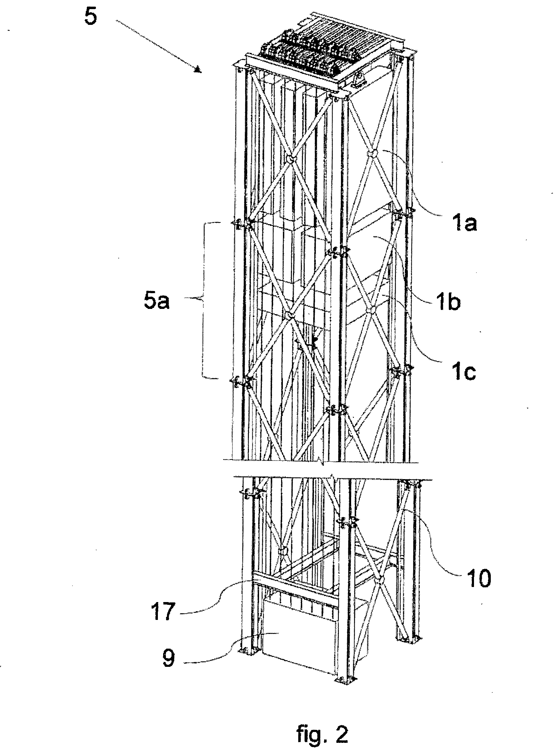

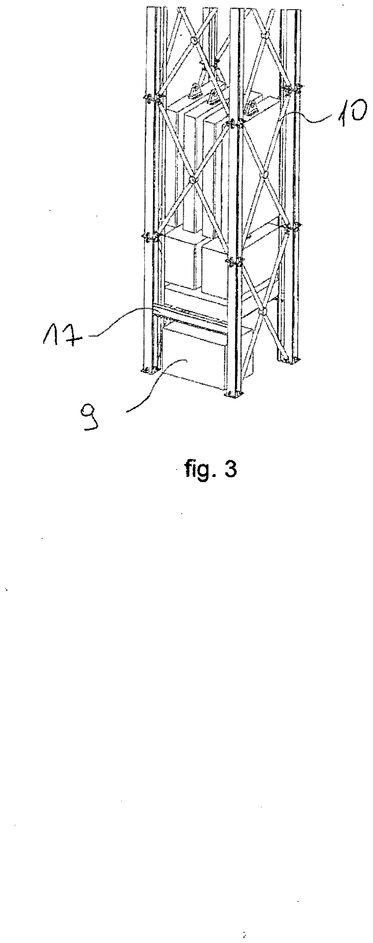

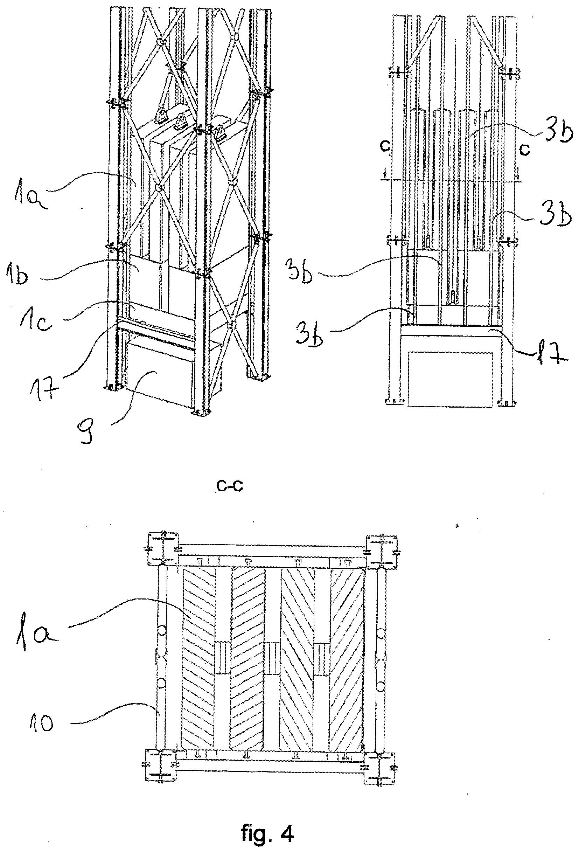

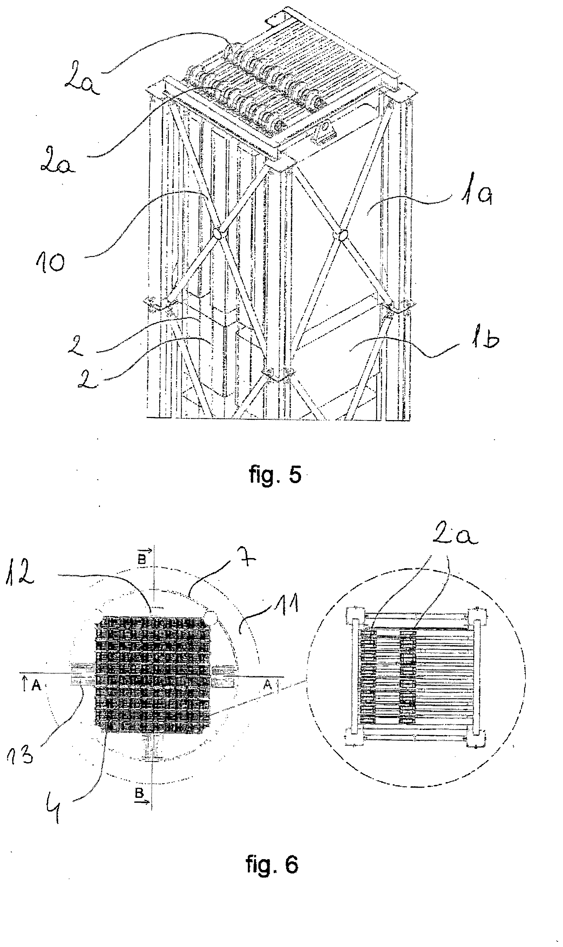

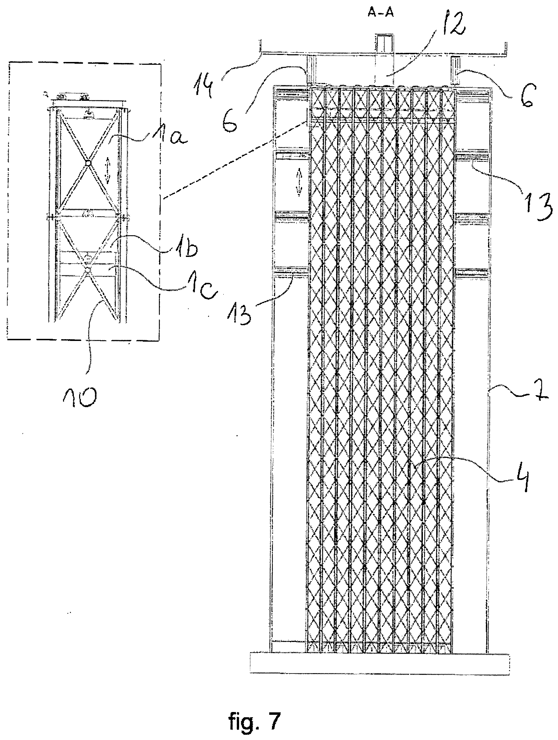

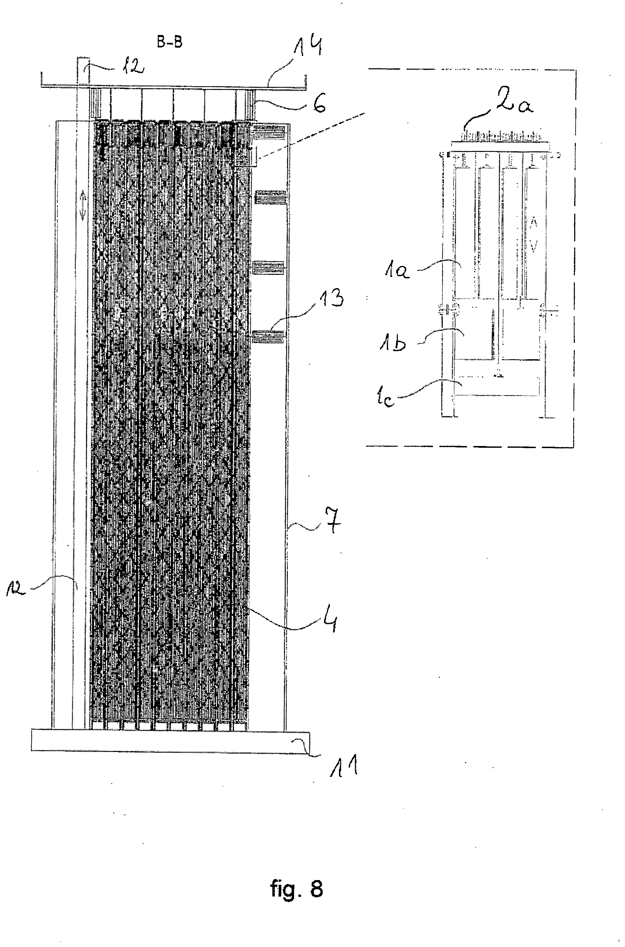

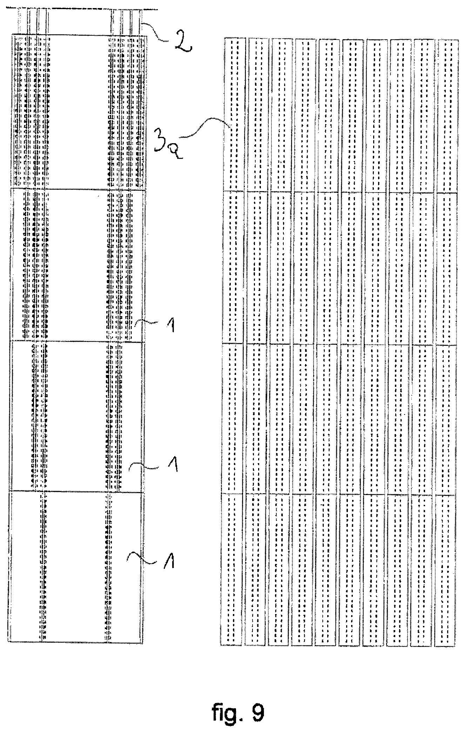

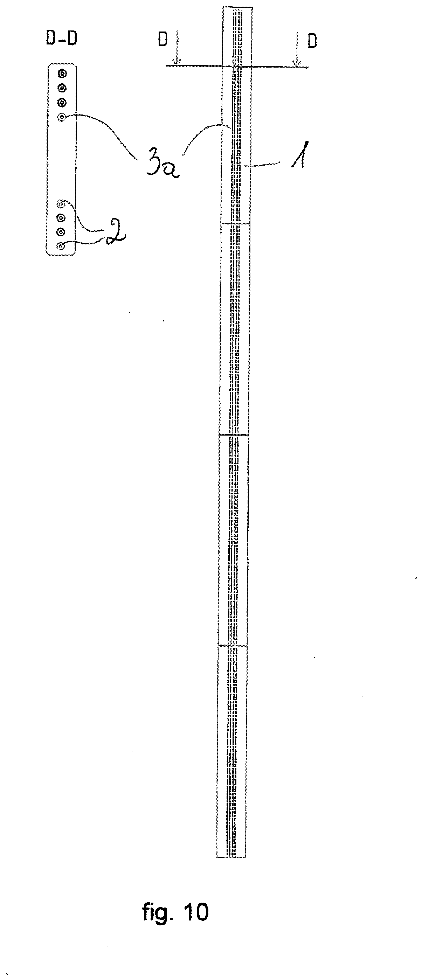

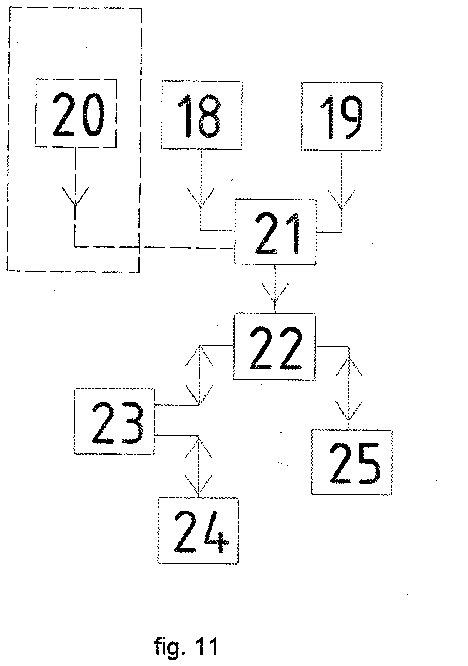

View of the gravity energy storage system, with the truss tower, foundation slab, perovskite coating on the outside of the reinforced concrete cylindrical structure with technological skylights and air inlets located in the lower section of the tower by the foundation. The top of the tower there is fenced maintenance and viewing deck located above the tower casing and above the vertical axis turbines. Another variant envisages such an energy storage without a fenced maintenance and viewing deck, which has been depicted in other figures.
fig. 2
   Partial view of a single modular section of the energy storage truss tower with all steel ballast blocks lifted in an arrangement of seven ballast blocks per section.
fig. 3
   View of the lower part of a single modular section of the energy storage truss tower with all steel ballast blocks unstacked. For better illustration, it does not include the view of the lifting cables as in Fig. 2, on which the ballast blocks are suspended and connected to the motors.
fig. 4
   View of the lower part of a single modular section of the energy storage truss tower with all steel ballast blocks unstacked and the C-C section, in the variant where the ballast blocks from different levels rest on each other. It does not include the view of the cables as in Fig. 2 on which the ballast blocks are suspended, and the cables are an element of the invention
fig. 5
   Top view of a single section of a modular truss tower with a lifting system comprising pulley blocks and their associated lifting cables. Such an arrangement of pulley blocks in another variant of the invention will be adequate to the amount and type of ballast blocks, assuming that each steel ballast has its own lifting system, and for concrete ballast blocks, one lifting system can support several vertically placed ballast blocks.
fig. 6
   A top view of the energy storage with the truss tower, variant without the upper fenced maintenance and viewing deck. Beside, a detail showing a top view of a single section of a modular truss tower.
fig. 7
   A-A section view of the energy storage showing the variant with a fenced maintenance and viewing deck, horizontal axis wind turbines mounted on the four upper levels of the energy storage and a detail of a fragment of one modular section.
fig. 8
   B-B section view of the energy storage showing a variant with a fenced maintenance and viewing deck and turbines with vertical rotation axes mounted below it and a detail of a fragment of one modular section. For better visualization, the detail showing the B-B section of the modular section does not show the braces, only their holders attached in the corners of the module.
fig. 9
   View of concrete ballast blocks placed vertically in four rows and ten columns leaning on each other. Each ballast with an embedded through pipe and at least two pipes per one ballast mass. A lifting cable mounted on a suitable ballast row passes through the pipe.
fig. 10
   View of a single column with a row of concrete ballast blocks, where the D-D section shows the arrangement of holes with tubular guides of the top ballast block.
fig. 11
   Block diagram of the principle of operation of the Gravity Energy Storage System according to the invention.

### Embodiment 1:

The Gravity Energy Storage System comprises a truss tower (4) placed inside a reinforced concrete cylindrical structure (7). The entire system is placed on the foundation (11). The truss tower (4) is made of interconnected modular sections (5) of the truss tower, and each such section is formed by vertically connecting together the frame modules (5a). The first floor, which is the first skeleton module (5a), is intended for the installation of energy conversion units (9). The energy conversion units (9) consist of motor / generators of electricity, gear motors, control systems, inverters and winding systems for the lifting cable (2), which, passing through pulleys (2a) mounted on the top of the section (5), lifts or lowers concrete ballast blocks (1). The concrete ballast blocks (1) in each section are stacked on top of each other and the lifting cable (2) passed through a hole in each. The lowest concrete ballast block may have two holes close to the centre, with the tubular guides (3a) passing centrally. The ballast block above it must have two holes in the same location and two more holes away from the centre of the ballast (1). The next ballast above it must have four of the same holes in the same location and two more located even further from the centre of the ballast (1). The lifting cable (2) runs in cascade and is also a guide for the entire row of ballast blocks (1). The Gravity Energy Storage System on top of the reinforced concrete cylindrical structure (7) has four vertical axis wind turbines (6). Inside the reinforced concrete cylindrical structure (7), in the space between the truss structure of the tower (4), there are horizontal axis wind turbines (13) whose operation is based on the thermodynamic flow of air which moves vertically upwards from the inlet channels (15) propelling the wind turbine blades (13) into motion and thus generating electricity.

The electricity generated during the operation of the tower's wind turbines (6,13) or external turbines, photovoltaic cells (8) or external photovoltaic sheets / panels powers the motors of the energy conversion unit (9) which cause the ballast blocks (1) to move vertically upwards. When the system is to discharge back the stored and converted energy (gravitational potential energy into electricity), the system receives a signal to lower the ballast blocks (1), thus forcing the drive system into motion, which becomes an electricity generator. Electricity is generated along the entire travel distance of the ballast block (1) and fed back to the grid from the generators. The modular section (5) of the truss tower is enclosed in a reinforced concrete cylindrical structure (7) in the shape of a circle, whose outer shell is a clad with flexible photovoltaic cells (8).

### Specification:

Power of installed motor / generators: 5 MW
Charging (lifting) time for all ballast blocks 7 h (25,200 s)
Discharging (lowering) time all ballast blocks 7 h (25,200 s)
Energy Storage Capacity: 5 MW x 7 h = 35 MWh
Weight of all ballast blocks: 85,627,000 kg
Absolute lifting elevation of ballast blocks: 150 m
Number of reinforced concrete ballast blocks: 4,000 pcs
Weight of one ballast block: 21,600 kg
Dimensions of 1 ballast block: 0.3 x 4 x 9 m

Overall dimensions of the energy storage system:
- height 200 m
- diameter of the round reinforced concrete enclosure 71 m
- dimensions of one section of the modular truss tower 5 m x 5 m
- dimensions of the truss tower 50 m x 50 m

Concrete ballast blocks are made of high-performance concrete with a compressive strength of 10 to 60 MPa, while the central part, not exposed to loads, may contain low-quality concrete with a compressive strength of 3 to 8 MPa.

### Embodiment 2:

Gravity Energy Storage System as in embodiment 1, but the ballast blocks are made of steel and they are attached to the lifting cable (2) by means of a fastening point fixed centrally on the top wall of the ballast (1a, 1b, 1c). The entire mass of a single modular section (5) of the truss tower consists of seven ballast blocks - four upper ballast blocks (1a), two middle ballast blocks (1b) below them and a lower ballast blocks (1c) below them, each of which is connected with the energy conversion unit (9) by means of a lifting cable (2 ) passing through the pulley (2a) located on top of the modular section (5) of the truss tower. Lifting is executed as in embodiment 1, but on the inside of the modular section (5) of the truss tower, linear guides (3b) are placed along the entire elevation, keeping the ballast blocks in a constant path during lifting/lowering.

### List of symbols:

1 - concrete ballast block
1a - upper ballast block
1b - middle ballast block
1c - bottom ballast block
2 - lifting cable
2a - pulley block
3a - tubular guide
3b - linear/rail guide
4 - truss tower
5 - modular section of the truss tower
5a - truss module
6 - Vertical-axis wind turbine (VAWT)
7 - reinforced concrete cylindrical structure
8 - photovoltaic cells
9 - energy conversion unit
10 - truss tower braces
11 - foundation
12 - maintenance lift
13 - horizontal axis wind turbine (HAWT)
14 - fenced maintenance and viewing deck
15 - maintenance skylights
16 - inlet duct with adjustable air flow
17 - ballast floor
18 - electricity supplied from the photovoltaic system
19 - electricity supplied from wind turbines
20 - electricity supplied from external renewable sources
21 - set of inverters
22 - energy conversion unit
23 - intelligent energy resources management module
24 - gravity energy storage tower
25 - power grid

## Claims

1. A gravity energy storage system utilising a truss tower structure, which includes a ballast block storage zone in its upper section, a ground-to-height and height-to-ground ballast block transfer system and a energy conversion system, wherein **the** truss tower structure is made up of modular sections, containing at least two truss modules placed one on top of the other, inside which ballast blocks composed of at least one ballast move vertically suspended on lifting cables, where the modular sections of the truss tower are arranged by adding them next to each other, **characterized in that** it consists of a reinforced concrete cylindrical structure (7) set on a foundation (11) and truss tower structure (4) placed centrally in it, and in the lowest truss module (5a) there is an energy conversion unit (9), which is connected through a gear and a lifting system with appropriate ballast block (1, 1a, 1b, 1c) and the height of the reinforced concrete cylindrical section (7) is at least equal to the height of the modular section (5) of the truss tower, wherein the outer reinforced concrete surface of the cylindrical structure (7) is covered with flexible photovoltaic cells (8) and it is connected to a system for collecting and draining water used for electrolysis.

2. A gravity energy storage system according to claim 1, **characterized in that** the diameter of the reinforced concrete cylindrical structure (7) ranges from 5 m to 100 m.

3. A gravity energy storage system according to claim 1, **characterized in that** the length of the base side of the truss tower (4) ranges from 1 m to 10 m.

4. A gravity energy storage system according to claim 1, **characterized in that** a single ballast block (1, 1a, 1b, 1c) has a weight of 1 ton to 50 tons.

5. A gravity energy storage system according to claim 1, **characterized in that** the ballast block storage level in the loaded state is at a height of 20 metres to 300 metres, and the lowest storey is used to house the energy conversion unit (9).

6. A gravity energy storage system according to claim 1, **characterized in that** the motor of the energy conversion unit (9) is the same body as the motor and the generator.

7. A gravity energy storage system according to claim 1, **characterized in that** the ballast blocks (1a, 1b, 1c) are steel blocks.

8. A gravity energy storage system according to claims 1 and 7, **characterized in that** the ballast consists of seven ballast blocks - four upper ballast blocks (1a), two middle ballast blocks (1b) below them and a lower ballast blocks (1c) below them, each of which is connected with the energy conversion unit (9) by means of a lifting cable (2 ) passing through the pulley (2a) located on top of the modular section (5) of the truss tower.

9. A gravity energy storage system according to claim 7 or 8, **characterized in that** there is a linear guide (3c) on the inner wall of the modular section (5) along the path of lowering and lifting the ballast blocks (1).

10. A gravity energy storage system according to claim 1, **characterized in that** the ballast blocks (1) are concrete blocks.

11. A gravity energy storage system according to claims 1 and 10, **characterized in that** that the ballast mass consists of four ballast blocks (1) placed on top of each other, with at least two holes containing tubular guides (3b) through which a steel lifting cable (3) passes connecting all ballast blocks (1) in a vertical row, and the holes extend along the length of the ballast block (1) and are centred along its depth, and diverge in pairs from the centre of the ballast along its width.

12. A gravity energy storage system according to claim 1, **characterised in that** the energy conversion unit (9) comprises at least a motor / generator with at least one gear motor, a system of winding shafts for lifting cables, a transformer station and cables.

13. A gravity energy storage system according to claim 1, **characterized in that** the energy conversion units (9) are connected to the power collector.

14. A gravity energy storage system according to claim 1, **characterized in that** there is a fenced maintenance and viewing deck (14) on top of the truss tower (4) and the reinforced concrete cylindrical structure (7) with a system for collecting and draining water used for electrolysis.

15. A gravity energy storage system according to claim 1, **characterized in that** vertical axis wind turbines (6) are mounted on the top of the truss tower (4).

16. A gravity energy storage system according to claim 1, **characterised in that** at least one horizontal axis wind turbine (13) is attached to the inner walls of the reinforced concrete cylindrical structure (7) and to the truss tower (4) on the upper levels of the energy storage.

17. A gravity energy storage system according to claim 1, **characterized in that** a maintenance lift (12) is mounted along the side wall of the truss tower (4), in the space defined by the reinforced concrete cylindrical structure.

## Patentansprüche

1. Ein Schwerkraftenergiespeichersystem mit einer Fachwerkturmstruktur, die in ihrem oberen Abschnitt einen Speicherbereich für Ballastblöcke, ein System zum Transport von Ballastblöcken vom Boden in die Höhe und von der Höhe zum Boden sowie ein Energieumwandlungssystem umfasst, wobei die Fachwerkturmstruktur aus modularen Abschnitten besteht, die mindestens zwei übereinander angeordnete Fachwerkmodule enthalten, in deren Inneren sich Ballastblöcke, bestehend aus mindestens einem Ballastelement, vertikal an Hubseilen aufgehängt bewegen, wobei die modularen Abschnitte des Fachwerkturms durch Aneinanderfügen angeordnet sind, **dadurch gekennzeichnet, dass** es aus einer auf einem Fundament (11) aufgestellten zylindrischen Stahlbetonkonstruktion (7) und einer darin zentral angeordneten Fachwerkturmstruktur (4) besteht, und dass sich im untersten Fachwerkmodul (5a) eine Energieumwandlungseinheit (9) befindet, die über ein Getriebe und ein Hebesystem mit entsprechenden Ballastblöcken (1, 1a, 1b, 1c) verbunden ist und die Höhe des zylindrischen Stahlbetonabschnitts (7) mindestens der Höhe des Modulabschnitts (5) des Fachwerkturms entspricht, wobei die äußere Stahlbetonoberfläche der zylindrischen Struktur (7) mit flexiblen Photovoltaikzellen (8) bedeckt ist und an ein System zum Sammeln und Ableiten von Wasser für die Elektrolyse angeschlossen ist.

2. Ein Schwerkraftenergiespeichersystem gemäß Anspruch 1, **dadurch gekennzeichnet, dass** der Durchmesser der zylindrischen Stahlbetonkonstruktion (7) zwischen 5 m und 100 m liegt.

3. Ein Schwerkraftenergiespeichersystem gemäß Anspruch 1, **dadurch gekennzeichnet, dass** die Länge der Bodenseite des Fachwerkturms (4) zwischen 1 m und 10 m liegt.

4. Ein Schwerkraftenergiespeichersystem gemäß Anspruch 1, **dadurch gekennzeichnet, dass** ein einzelner Ballastblock (1, 1a, 1b, 1c) ein Gewicht von 1 Tonne bis 50 Tonnen hat.

5. Ein Schwerkraftenergiespeichersystem gemäß Anspruch 1, **dadurch gekennzeichnet, dass** sich die Lagerebene für die Ballastblöcke im beladenen Zustand auf einer Höhe von 20 Metern bis 300 Metern befindet und die unterste Ebene zur Unterbringung der Energieumwandlungseinheit (9) dient.

6. Ein Schwerkraftenergiespeichersystem gemäß Anspruch 1, **dadurch gekennzeichnet, dass** der Motor der Energieumwandlungseinheit (9) mit dem Motor und dem Generator ein und dasselbe Bauteil ist.

7. Ein Schwerkraftenergiespeichersystem gemäß Anspruch 1, **dadurch gekennzeichnet, dass** die Ballastblöcke (1a, 1b, 1c) Stahlblöcke sind.

8. Ein Schwerkraftenergiespeichersystem gemäß den Ansprüchen 1 und 7, **dadurch gekennzeichnet, dass** der Ballast aus sieben Ballastblöcken besteht - vier oberen Ballastblöcken (1a), zwei darunter liegenden mittleren Ballastblöcken (1b) und einem darunter liegenden unteren Ballastblock (1c), von denen jeder mittels eines Hubseils (2), das durch die oben auf dem Modulabschnitt (5) des Fachwerkturms angeordnete Seilrolle (2a) verläuft, mit der Energieumwandlungseinheit (9) verbunden ist.

9. Ein Schwerkraftenergiespeichersystem gemäß Anspruch 7 oder 8, **dadurch gekennzeichnet, dass** sich an der Innenwand des Modulabschnitts (5) entlang der Ab- und Aufwärtsbahn der Ballastblöcke (1) eine Linearführung (3c) befindet.

10. Ein Schwerkraftenergiespeichersystem gemäß Anspruch 1, **dadurch gekennzeichnet, dass** die Ballastblöcke (1) Betonblöcke sind.

11. Ein Schwerkraftenergiespeichersystem gemäß den Ansprüchen 1 und 10, **dadurch gekennzeichnet, dass** die Ballastmasse aus vier übereinander angeordneten Ballastblöcken (1) besteht, welche mit mindestens zwei Löchern mit rohrförmigen Führungen (3b) versehen sind, durch die ein Hubseil aus Stahl (3) verläuft, das alle Ballastblöcke (1) in einer vertikalen Reihe verbindet, und die Löcher sich über die Länge des Ballastblocks (1) erstrecken und entlang seiner Tiefe zentriert sind und paarweise vom Zentrum des Ballasts entlang seiner Breite auseinanderlaufen.

12. Ein Schwerkraftenergiespeichersystem gemäß Anspruch 1, **dadurch gekennzeichnet, dass** die Energieumwandlungseinheit (9) mindestens einen Motor/Generator mit mindestens einem Getriebemotor, ein System von Wickelwellen für Hubseile, eine Transformatorstation und Kabel umfasst.

13. Ein Schwerkraftenergiespeichersystem nach Anspruch 1, **dadurch gekennzeichnet, dass** die Energieumwandlungseinheiten (9) mit dem Stromabnehmer verbunden sind.

14. Ein Schwerkraftenergiespeichersystem nach Anspruch 1, **dadurch gekennzeichnet, dass** sich auf der Spitze des Fachwerkturms (4) und der zylindrischen Stahlbetonkonstruktion (7) eine umzäunte Wartungs- und Aussichtsplattform (14) mit einem System zum Sammeln und Ableiten von für die Elektrolyse verwendetem Wasser befindet.

15. Ein Schwerkraftenergiespeichersystem gemäß Anspruch 1, **dadurch gekennzeichnet, dass** Vertikalachsen-Windkraftanlagen (6) oben auf dem Fachwerkturm (4) montiert sind.

16. Ein Schwerkraftenergiespeichersystem gemäß Anspruch 1, **dadurch gekennzeichnet, dass** mindestens eine Horizontalachsen-Windkraftanlage (13) an den Innenwänden der zylindrischen Stahlbetonkonstruktion (7) und am Fachwerkturm (4) auf den oberen Ebenen des Energiespeichers befestigt ist.

17. Ein Schwerkraftenergiespeichersystem gemäß Anspruch 1, **dadurch gekennzeichnet, dass** ein Wartungsaufzug (12) entlang der Seitenwand des Fachwerkturms (4) in dem durch die zylindrische Stahlbetonkonstruktion definierten Raum angebracht ist.

## Revendications

1. Un système de stockage d'énergie par gravité utilisant une structure de tours en treillis, qui comprend une zone de stockage du bloc de lestage dans sa section supérieure, un système de transfert du bloc de lestage du bas vers le haut et du haut vers le bas et un système de conversion d'énergie, où la structure de tours en treillis est composée de sections modulaires, comprenant au moins de modules de treillis placés l'un sur l'autre, dans lesquels les blocs de lestage composé d'au moins un lest se déplacent verticalement, suspendus sur des câbles de levage, où les sections modulaires de la tour en treillis sont agencées par l'ajout des unes aux autres, **caractérisé en ce qu'il** est composé d'une structure cylindrique en béton armé (7) fixée sur une fondation (11) et d'une structure de tours en treillis (4) y placée au milieu, et dans le module de treillis le plus bas (5a) se trouve une unité de conversion de l'énergie (9), qui est reliée par un engrenage et un système de levage au bloc de lestage correspondant (1, 1a, 1b, 1c) et la hauteur de la section cylindrique en béton armé (7) est au moins égal à la hauteur de la section modulaire (5) de la tour en treillis, où la surface extérieure en béton armé de la structure cylindrique (7) est recouverte de cellules photovoltaïques flexibles (8) et est connectée au système pour collecter et drainer l'eau utilisée pour l'électrolyse.

2. Un système de stockage d'énergie par gravité selon la revendication 1, **caractérisé en ce que** le diamètre de la structure cylindrique en béton armé (7) peut aller de 5 m à 100 m.

3. Un système de stockage d'énergie par gravité selon la revendication 1, **caractérisé en ce que** la longueur du côté base de la tour en treillis (4) peut aller de 1 m à 10 m.

4. Un système de stockage d'énergie par gravité selon la revendication 1, **caractérisé en ce qu'**un seul bloc de lestage (1, 1a, 1b, 1c) peut peser de 1 tonne à 50 tonnes.

5. Un système de stockage d'énergie par gravité selon la revendication 1, **caractérisé en ce que** le niveau de stockage du bloc de lestage chargé peut atteindre une hauteur allant de 20 mètres à 300 mètres, et le niveau inférieur est utilisé pour abriter l'unité de conversion de l'énergie (9).

6. Un système de stockage d'énergie par gravité selon la revendication 1 **caractérisé en ce que** le moteur de l'unité de conversion de l'énergie (9) constitue le même ensemble que le moteur et le générateur.

7. Un système de stockage d'énergie par gravité selon la revendication 1 **caractérisé en ce que** les blocs de lestage (1a, 1b, 1c) sont des blocs d'acier.

8. Un système de stockage d'énergie par gravité selon les revendications 1 et 7, **caractérisé en ce que** le lest est constitué de sept bloc de lestage - quatre blocs de lestage supérieurs (1a), deux blocs de lestage centraux (1b) au-dessous et un bloc de lestage inférieur (1c) au-dessous d'eux, chacun d'eux étant connecté à l'unité de conversion de l'énergie (9) par un câble de levage (2 ) passant par une poulie (2a) située en haut de la section modulaire (5) de la tour en treillis.

9. Un système de stockage d'énergie par gravité selon les revendications 7 ou 8, **caractérisé en ce qu'**un guide linéaire (3c) est présent sur la paroi intérieure de la section modulaire (5) le long de la voie de baisse et de levage des blocs de lestage (1).

10. Un système de stockage d'énergie par gravité selon la revendication 1 **caractérisé en ce que** les blocs de lestage (1) sont des blocs en béton.

11. Un système de stockage d'énergie par gravité selon les revendications 1 et 10, **caractérisé en ce que** la masse de lestage est constituée de quatre blocs de lestage (1) placés les uns sur les autres, avec au moins deux orifices contenant des guides tubulaires (3b) à travers lesquels passe le câble de levage en acier (3) reliant tous les blocs de lestage (1) dans une rangée verticale, et les orifices s'étendent sur la longueur du bloc de lestage (1) et sont axés sur sa profondeur, et divergent par paires du centre de lestage sur sa largeur.

12. Un système de stockage d'énergie par gravité selon la revendication 1 **caractérisé en ce que** l'unité de conversion de l'énergie (9) comprend au moins un moteur / un générateur avec au moins un motoréducteur, un système d'arbres enrouleurs pour les câbles de levage, une station de transformation et des câbles.

13. Un système de stockage d'énergie par gravité selon la revendication 1 **caractérisé en ce que** les unités de conversion de l'énergie (9) sont connectées à un collecteur de courant.

14. Un système de stockage d'énergie par gravité selon la revendication 1 **caractérisé en ce qu'**une maintenance clôturée et un pont d'observation (14) sont présents en haut la tour en treillis (4) et qu'il y a une structure cylindrique en béton armé (7) avec un système de collecte et de drainage de l'eau utilisée pour l'électrolyse.

15. Un système de stockage d'énergie par gravité selon la revendication 1 **caractérisé en ce que** les turbines à axe vertical (6) sont montées en haut de la tour en treillis (4).

16. Un système de stockage d'énergie par gravité selon la revendication 1 **caractérisé en ce qu'**au moins une turbine à axe horizontal (13) est fixée aux parois intérieures de la structure cylindrique en béton armé (7) et à la tour en treillis (4) sur les niveaux supérieurs du stockage d'énergie.

17. Un système de stockage d'énergie par gravité selon la revendication 1 **caractérisé en ce qu'**un élévateur de maintenance (12) est monté le long de la paroi latérale de la tour en treillis (4), dans l'espace délimité par la structure cylindrique en béton armé.
